(19) Europäisches Patentamt
European Patent Office
Office européen des brevets

(11) **EP 2 981 086 A1**

(12) **EUROPEAN PATENT APPLICATION**
published in accordance with Art. 153(4) EPC

(43) Date of publication:
**03.02.2016 Bulletin 2016/05**

(51) Int Cl.:
**H04N 19/30** $^{(2014.01)}$

(21) Application number: **14774850.3**

(86) International application number:
**PCT/JP2014/058087**

(22) Date of filing: **24.03.2014**

(87) International publication number:
**WO 2014/157087 (02.10.2014 Gazette 2014/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.03.2013 JP 2013061610**

(71) Applicant: **KDDI Corporation**
**Tokyo 160-0023 (JP)**

(72) Inventors:
• **YOSHINO, Tomonobu**
**Fujimino-shi**
**Saitama 356-8502 (JP)**
• **NAITO, Sei**
**Fujimino-shi**
**Saitama 356-8502 (JP)**

(74) Representative: **Reeve, Nicholas Edward**
**Reddie & Grose LLP**
**16 Theobalds Road**
**London WC1X 8PL (GB)**

(54) **VIDEO ENCODING DEVICE, VIDEO DECODING DEVICE, VIDEO ENCODING METHOD, VIDEO DECODING METHOD, AND PROGRAM**

(57) A video encoding apparatus AA, which encodes a digital video provided as a video signal of a pixel value space subjected to spatial and temporal sampling, includes a nonlinear video decomposition unit 10, a structure component encoding unit 20, and a texture component encoding unit 30. The nonlinear video decomposition unit 10 decomposes an input video a into a structure component and a texture component. The structure component encoding unit 20 performs compression encoding processing on the structure component of the input video a decomposed by the nonlinear video decomposition unit 10. The texture compression encoding unit 30 performs compression encoding processing on the texture component of the input video a decomposed by the nonlinear video decomposition unit 10. Such an arrangement provides improved encoding efficiency.

FIG. 1

EP 2 981 086 A1

**Description**

[TECHNICAL FIELD]

The present invention relates to a video encoding apparatus, a video decoding apparatus, a video encoding method, a video decoding method, and a computer program.

[BACKGROUND ART]

In recent years, accompanying progress in techniques with respect to image acquisition devices and image display devices, progress is being made in providing high-quality video content in broadcasting and program delivery. Typical examples of such improvement in video content include improvement in the spatial resolution and improvement in the frame rate (temporal resolution). It is expected that video content having high spatial resolution and high temporal resolution will become broadly popular in the future.

Regarding video compression techniques, it is known that standard compression techniques, typical examples of which include H.264 (see Non-patent document 1, for example), HEVC (High Efficiency Video Coding), and the like, provide video compression of various kinds of videos with high encoding performance. In particular, such compression techniques provide improved flexibility for providing videos with improved spatial resolution. With HEVC, high encoding performance can be expected for high-resolution videos even if they have a maximum resolution of 7680 pixels x 4320 lines (a resolution 16 times that of Hi-Vision images).

[Related Art Documents]

[Non-patent Documents]

[Non-patent document 1]
Joint Video Team (JVT) of ISO/IEC MPEG and ITU-T VCEG, "Text of ISO/IEC 14496-10 Advanced Video Coding"
[Non-patent document 2]
J. F. Aujol, G. Gilboa, T. Chan and S. Osher, "Structure-Texture Image Decomposition - Modeling, Algorithms, and Parameter Selection" Int. J. Comput. Vis., Vol.67, no.1, pp.111-136, April 2006.
[Non-patent document 3]
T. Saito, H. Aizawa, and T. Komatsu, "Nonlinear image decomposition method utilizing inter-channel color cross-correlations", The IEICE transactions on information and systems (Japanese edition), vol. J92-D, No. 10, pp. 1733-1736, 2009.

[Patent Documents]

[Patent Document 1] Japanese Patent Application Laid Open No. 2008-113292
[Patent Document 2] Japanese Patent Application Laid Open No. 2009-260779

[DISCLOSURE OF THE INVENTION]

[PROBLEM TO BE SOLVED BY THE INVENTION]

In conventional video compression techniques, processing is performed on the basis of processing a video signal for each frame, and encoding is performed based on inter-frame prediction with respect to pixel values. In a case in which such a conventional video compression technique is applied in a simple manner to a video having a high frame rate, there is only a very small difference in the image pattern between adjacent frames. Furthermore, noise due to change in illumination, noise that occurs in an image acquisition device, or the like, has a large effect on the inter-frame prediction. This leads to a difficulty in the inter-frame prediction.

In this regard, a technique configured on the basis of motion compensation prediction according to the H.264 standard has been proposed. In this technique, motion compensation prediction is provided with improved precision based on the pixel value (luminance) slope, frame rate, and camera aperture (see Patent documents 1 and 2, for example). However, such a technique is incapable of sufficiently removing texture fluctuations in the pixel values that occur due to a change in illumination or due to the image acquisition device. Thus, there is a concern that such a technique has the potential to provide inter-frame prediction with insufficient performance.

Accordingly, it is a purpose of the present invention to solve the aforementioned problem, and particularly, to provide improved encoding performance.

[MEANS TO SOLVE THE PROBLEM]

In order to solve the aforementioned problems, the present invention proposes the following items.

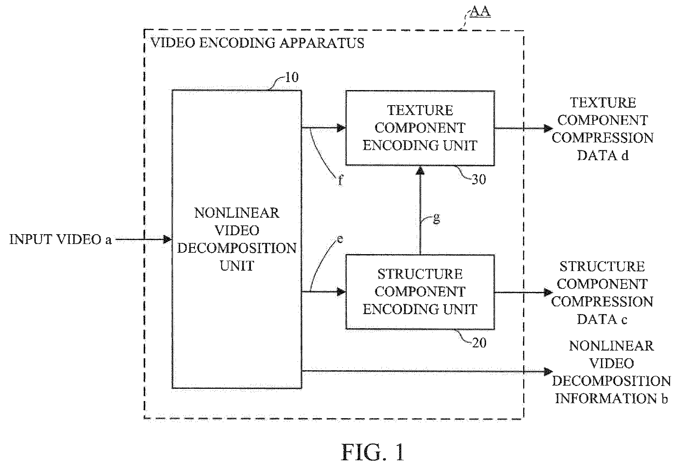

(1) The present invention proposes a video encoding apparatus (which corresponds to a video encoding apparatus AA shown in Fig. 1, for example) for a digital video configured as a video signal of a pixel value space subjected to spatial and temporal sampling. The video encoding apparatus comprises: a nonlinear video decomposition unit (which corresponds to a nonlinear video decomposition unit 10 shown in Fig. 1, for example) that decomposes an input video into a structure component and a texture component; a structure component encoding unit (which corresponds to a structure component encoding unit 20 shown in Fig. 1, for example) that performs compression encoding processing on the structure component of the input video decomposed by the nonlinear video decomposition unit; and a texture component encoding unit (which corresponds to a texture component encoding unit 30 shown in Fig. 1, for example) that performs compression encoding processing on the texture component of the input video decomposed by the nonlinear video decomposition unit.

Here, investigation will be made below regarding an arrangement configured to decompose an input video into a structure component and a texture component. The structure component of the input video has a high correlation between adjacent pixels. Furthermore, texture variation in the pixel values is removed from the structure component in the temporal direction. Thus, in a case of performing compression encoding processing on the structure component using a conventional video compression technique based on temporal-direction prediction, such an arrangement provides high-efficiency encoding. On the other hand, the texture component of the input video has a low correlation between adjacent pixels in both the spatial direction and the temporal direction. However, such an arrangement may employ three-dimensional orthogonal transform processing in the spatial direction and the temporal direction using a suitable orthogonal transform algorithm or otherwise may employ temporal prediction for a transform coefficient using a coefficient obtained in two-dimensional orthogonal transform processing in the spatial direction assuming that noise due to the texture component occurs according to a predetermined model, thereby providing high-efficiency encoding of the texture component.

Thus, with the present invention, the input video is decomposed into a structure component and a texture component. Furthermore, compression encoding processing is separately performed on the structure component and the texture component. Thus, such an arrangement provides improved encoding efficiency.

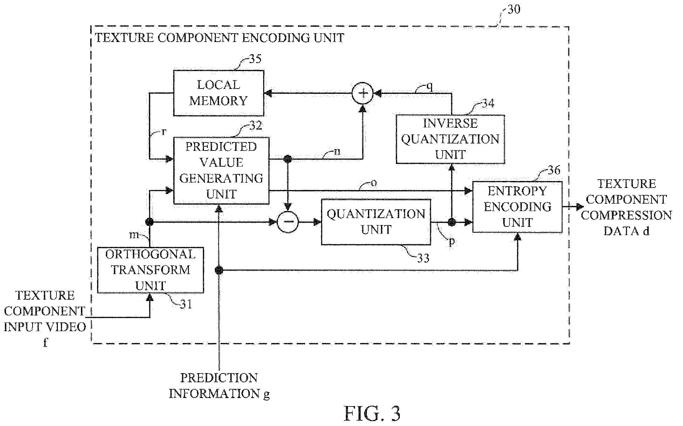

(2) The present invention proposes the video encoding apparatus described in (1), wherein the texture component encoding unit comprises: an orthogonal transform unit (which corresponds to an orthogonal transform unit 31 shown in Fig. 3, for example) that performs orthogonal transform processing on the texture component of the input video decomposed by the nonlinear video decomposition unit; a predicted value generating unit (which corresponds to a predicted value generating unit 32 shown in Fig. 3, for example) that generates a predicted value of the texture component of the input video thus subjected to the orthogonal transform processing by use of the orthogonal transform unit, based on inter-frame prediction in a frequency domain; a quantization unit (which corresponds to a quantization unit 33 shown in Fig. 3, for example) that performs quantization processing on a difference signal that represents a difference between the texture component of the input video thus subjected to the orthogonal transform processing by use of the orthogonal transform unit and the predicted value generated by the predicted value generating unit; and an entropy encoding unit (which corresponds to an entropy encoding unit 36 shown in Fig. 3, for example) that performs entropy encoding of the difference signal thus quantized by the quantization unit.

With the invention, in the video encoding apparatus described in (1), the predicted value is generated for the texture component of the input video based on inter-frame prediction in the frequency domain. Furthermore, the compression data of the texture component of the input video is generated using the predicted value thus generated. Thus, such an arrangement is capable of performing compression encoding processing on the texture component of the input video.

(3) The present invention proposes the video encoding apparatus described in (2), wherein the structure component encoding unit calculates a motion vector used in inter-frame prediction when the structure component of the input video is subjected to the compression encoding processing, wherein the predicted value generating unit extrapolates or otherwise interpolates the motion vector according to a frame interval between a reference frame and a processing frame for the motion vector calculated by the structure component encoding unit such that it matches a frame interval used as a unit of orthogonal transform processing in the temporal direction, and wherein the predicted value generating unit performs inter-frame prediction using the motion vector thus obtained by extrapolation or otherwise by interpolation.

With the invention, in the video encoding apparatus described in (2), the motion vector obtained for the structure component of the input video is used to perform compression encoding processing on the texture component of the input video. Thus, there is no need to newly calculate the motion vector used for processing the texture component of the input video. Thus, such an arrangement is capable of reducing an amount of encoding information used for the temporal-direction prediction for the texture component.

Furthermore, with the invention, in the video encoding apparatus described in (2), the motion vector is obtained by performing extrapolation processing or otherwise interpolation processing on the motion vectors obtained for the structure component of the input video according to the frame interval between the processing frame and the reference frame such that it matches a frame interval used as a unit of orthogonal transform processing in the temporal direction. Thus, such an arrangement provides scaling from the motion vector obtained for the structure component of the input video to the motion vector for the texture component which is to be processed in the temporal direction in a unit of processing that differs from that used in the processing for the structure component. Thus, such an arrangement suppresses degradation in encoding efficiency.

(4) The present invention proposes the video encoding apparatus described in (2) or (3), wherein the structure component encoding unit calculates a motion vector used in inter-frame prediction when the structure component of the input video is subjected to the compression encoding processing, and wherein the entropy encoding unit determines a scanning sequence for the texture component based on multiple motion vectors in a region that corresponds to a processing block for the entropy encoding after the multiple motion vectors are calculated by the structure component encoding unit.

With the invention, in the video encoding apparatus described in (2) or (3), the motion vector obtained for the structure component of the input video is used to determine the scanning sequence for the texture component. Thus, such an arrangement is capable of appropriately determining the scanning sequence for the texture component.

(5) The present invention proposes the video encoding apparatus described in (4), wherein the entropy encoding unit calculates an area of a region defined by the multiple motion vectors in a region that corresponds to the processing block for the entropy encoding after the motion vectors are obtained by the structure component encoding unit, and wherein the entropy encoding unit determines the scanning sequence based on the area thus calculated.

With the invention, in the video encoding apparatus described in (4), the scanning sequence for the texture component is determined based on the area of a region defined by the motion vectors obtained for the structure component of the input video. Specifically, judgment is made whether or not there is a large motion in a given region based on the area of a region defined by the motion vectors obtained for the structure component of the input video. Thus, such an arrangement is capable of determining a suitable scanning sequence based on the judgment result.

(6) The present invention proposes the video encoding apparatus described in (4), wherein the entropy encoding unit calculates, for each of the horizontal direction and the vertical direction, an amount of variation in the multiple motion vectors in a region that corresponds to the processing block for the entropy encoding after the motion vectors are obtained by the structure component encoding unit, and wherein the entropy encoding unit determines the scanning sequence based on the amount of variation thus calculated.

With the invention, in the video encoding apparatus described in (4), the scanning sequence for the texture component is determined based on the amount of horizontal-direction variation and the amount of vertical-direction variation in motion vectors obtained for the structure component of the input video. Specifically, judgment is made whether or not there is a large motion in a given region based on the amount of horizontal-direction variation and the amount of vertical-direction variation in the motion vectors obtained for the structure component of the input video. Thus, a suitable scanning sequence can be determined based on the judgment result.

(7) The present invention proposes the video encoding apparatus described in any one of (1) through (6), wherein the structure component encoding unit performs, in a pixel domain, the compression encoding processing on the structure component of the input video obtained by decomposing the input video by use of the nonlinear video decomposition unit.

With the invention, in the video encoding apparatus described in any one of (1) through (6), compression encoding processing is performed on the structure component of the input video in the pixel domain. Thus, such an arrangement is capable of performing compression encoding processing on the structure component of the input video in the pixel domain.

(8) The present invention proposes the video encoding apparatus described in any one of (1) through (7), wherein the texture component encoding unit performs, in a frequency domain, the compression encoding processing on the texture component of the input video obtained by decomposing the input video by use of the nonlinear video decomposition unit.

With the invention, in the video encoding apparatus described in any one of (1) through (7), the compression encoding processing is performed on the texture component of the input video in the frequency domain. Thus, such an arrangement is capable of performing compression encoding processing on the texture component of the input video in the frequency domain.

(9) The present invention proposes the video encoding apparatus described in any one of (1) through (8), wherein the structure component encoding unit performs the compression encoding processing using a prediction encoding technique on a block basis.

With the invention, in the video encoding apparatus described in any one of (1) through (8), the compression encoding processing is performed using a prediction encoding technique on a block basis. Thus, such an arrangement is capable of performing the compression encoding processing using a prediction encoding technique on a block basis.

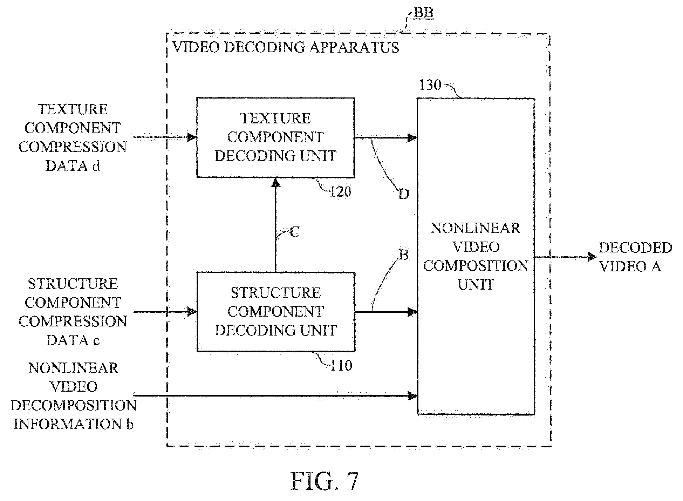

(10) The present invention proposes a video decoding apparatus (which corresponds to a video decoding apparatus BB shown in Fig. 7, for example) for a digital video configured as a video signal of a pixel value space subjected to spatial and temporal sampling. The video decoding apparatus comprises: a structure component decoding unit (which corresponds to a structure component decoding unit 110 shown in Fig. 7, for example) that decodes compression data of a structure component subjected to compression encoding processing; a texture component decoding unit (which corresponds to a texture component decoding unit 120 shown in Fig. 7, for example) that decodes compression data of a texture component subjected to the compression encoding processing; and a nonlinear video composition unit (which corresponds to a nonlinear video composition unit 130 shown in Fig. 7, for example) that generates a decoded video based on a signal of the structure component decoded by the structure component decoding unit and a signal of the texture component decoded by the texture component decoding unit.

Here, investigation will be made below regarding an arrangement configured to decompose an input video into a structure component and a texture component. The structure component of the input video has a high correlation between adjacent pixels. Furthermore, texture variation in the pixel values is removed from the structure component in the temporal direction. Thus, in a case of performing compression encoding processing on the structure component using a conventional video compression technique based on temporal-direction prediction, such an arrangement provides high-efficiency encoding. On the other hand, the texture component of the input video has a low correlation between adjacent pixels in both the spatial direction and the temporal direction. However, such an arrangement may employ three-dimensional orthogonal transform processing in the spatial direction and the temporal direction using a suitable orthogonal transform algorithm or otherwise may employ temporal prediction for a transform coefficient using a coefficient obtained in two-dimensional orthogonal transform processing in the spatial direction assuming that noise due to the texture component occurs according to a predetermined model, thereby providing high-efficiency encoding of the texture component.

Thus, with the invention, the input video is discomposed into a structure component and a texture component. Furthermore, decoding processing is separately performed on each of the structure component and the texture component which have separately been subjected to compression encoding processing. Furthermore, the decoded results are combined so as to generate a decoded video. This provides improved decoding efficiency.

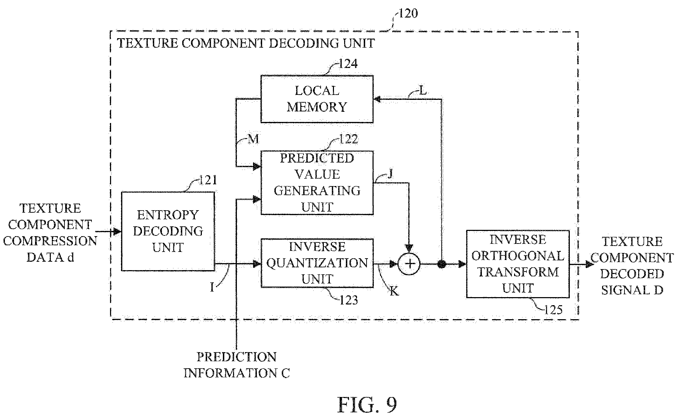

(11) The present invention proposes the video decoding apparatus described in (10), wherein the texture component decoding unit comprises: an entropy decoding unit (which corresponds to an entropy decoding unit 121 shown in Fig. 9, for example) that performs entropy decoding processing on the compression data of the texture component subjected to the compression encoding processing; a predicted value generating unit (which corresponds to a predicted value generating unit 122 shown in Fig. 9, for example) that generates a predicted value with respect to the signal of the texture component decoded by the entropy decoding unit based on inter-frame prediction in a frequency domain; an inverse quantization unit (which corresponds to an inverse quantization unit 123 shown in Fig. 9, for example) that performs inverse quantization processing on the signal of the texture component decoded by the entropy decoding unit; and an inverse orthogonal transform unit (which corresponds to an inverse orthogonal transform unit 125 shown in Fig. 9, for example) that performs inverse orthogonal transform processing on sum information of the predicted value generated by the predicted value generating unit and the signal of the texture component subjected to inverse quantization processing by use of the inverse quantization unit.

With the invention, in the video decoding apparatus described in (10), after the entropy decoding processing is performed on the compression data of the texture component, a prediction value is generated based on inter-frame prediction in the frequency domain. Subsequently, the texture component of the decoded video is generated using the prediction value thus generated. Thus, such an arrangement is capable of generating the texture component of the decoded video.

(12) The present invention proposes the video decoding apparatus described in (11), wherein the structure component decoding unit calculates a motion vector used in inter-frame prediction when the structure component decoding unit decodes the compression data of the structure component subjected to the compression encoding processing, wherein the predicted value generating unit extrapolates or otherwise interpolates the motion vector according to a frame interval between a reference frame and a processing frame for the motion vector calculated by the structure component decoding unit such that it matches a frame interval used as a unit of orthogonal transform processing in the temporal direction, and wherein the predicted value generating unit performs inter-frame prediction using the motion vector thus obtained by extrapolation or otherwise interpolation.

With the invention, in the video decoding apparatus described in (11), the motion vector used in the inter-frame prediction in the decoding processing for the compression data of the structure component is used to decode the compression data of the texture component. Thus, there is no need to newly calculate the motion vector used in the inter-frame prediction in the decoding processing for the compression data of the structure component. Thus, such an arrangement is capable of reducing an amount of encoding information used for the temporal-direction prediction for the texture component.

Furthermore, with the invention, in the video decoding apparatus described in (11), extrapolation processing or otherwise interpolation processing is performed on the motion vectors used in the inter-frame prediction in the decoding processing for the compression data of the structure component according to the frame interval between the processing frame and the reference frame such that it matches a frame interval used as a unit of orthogonal transform processing in the temporal direction. Thus, such an arrangement provides scaling from the motion vector used in the inter-frame prediction in the decoding processing for the compression data of the structure component to the motion vector for the texture component which is to be processed in the temporal direction in a unit of processing that differs from that used in the processing for the structure component. Thus, such an arrangement suppresses degradation in encoding efficiency.

(13) The present invention proposes the video decoding apparatus described in (11) or (12), wherein the structure component decoding unit calculates a motion vector used in inter-frame prediction when the compression data of the structure component subjected to the compression encoding processing is decoded, and wherein the entropy decoding unit determines a scanning sequence for the texture component based on multiple motion vectors in a region that corresponds to a processing block for the entropy decoding after the multiple motion vectors are calculated by the structure component decoding unit.

With the invention, in the video decoding apparatus described in (11) or (12), the motion vectors used in the inter-frame prediction in the decoding processing for the compression data of the structure component are used to determine the scanning sequence for the texture component. Thus, such an arrangement is capable of appropriately determining the scanning sequence for the texture component.

(14) The present invention proposes the video decoding apparatus described in (13), wherein the entropy decoding unit calculates an area of a region defined by the multiple motion vectors in a region that corresponds to the processing block for the entropy decoding after the motion vectors are obtained by the structure component decoding unit, and wherein the entropy decoding unit determines the scanning sequence based on the area thus calculated.

With the invention, in the video decoding apparatus described in (13), the scanning sequence for the texture component is determined based on the area of a region defined by the motion vectors used in the inter-frame prediction in the decoding processing for the compression data of the structure component. Specifically, judgment is made whether or not there is a large motion in a given region based on the area of a region defined by the motion vectors used in the inter-frame prediction in the decoding processing for the compression data of the structure component. Thus, such an arrangement is capable of determining a suitable scanning sequence based on the judgment result.

(15) The present invention proposes the video decoding apparatus described in (13), wherein the entropy decoding unit calculates, for each of the horizontal direction and the vertical direction, an amount of variation in the multiple motion vectors in a region that corresponds to the processing block for the entropy decoding after the motion vectors are obtained by the structure component decoding unit, and wherein the entropy decoding unit determines the scanning sequence based on the amount of variation thus calculated.

With the invention, in the video decoding apparatus described in (13), the scanning sequence for the texture component is determined based on the amount of horizontal-direction variation and the amount of vertical-direction variation in the motion vectors used in the inter-frame prediction in the decoding processing for the compression data of the structure component. Specifically, judgment is made whether or not there is a large motion in a given region based on the amount of horizontal-direction variation and the amount of vertical-direction variation in the motion vectors used in the inter-frame prediction in the decoding processing for the compression data of the structure component. Thus, a suitable scanning sequence can be determined based on the judgment result.

(16) The present invention proposes the video decoding apparatus described in any one of (10) trough (15), wherein the structure component decoding unit decodes, in a pixel domain, the compression data of the structure component subjected to the compression encoding processing.

With the invention, in the video decoding apparatus described in any one of (10) through (15), decoding processing is performed on the compression data of the structure component in the pixel domain. Thus, such an arrangement is capable of decoding the compression data of the structure component in the pixel domain.

(17) The present invention proposes the video decoding apparatus described in any one of (10) trough (16), wherein the texture component decoding unit decodes, in a frequency domain, the compression data of the texture component subjected to the compression encoding processing.

With the invention, in the video decoding apparatus described in any one of (10) through (16), decoding processing is performed on the compression data of the texture component in the frequency domain. Thus, such an arrangement is capable of decoding the compression data of the texture component in the frequency domain.

(18) The present invention proposes the video decoding apparatus described in any one of (10) trough (17), wherein the structure component decoding unit performs the decoding processing using a prediction decoding technique on a block basis.

With the invention, in the video decoding apparatus described in any one of (10) through (17), decoding processing is performed using a prediction decoding technique on a block basis. Thus, such an arrangement is capable of performing decoding processing using a prediction decoding technique on a block basis.

(19) The present invention proposes a video encoding method used by a video encoding apparatus (which corresponds to a video encoding apparatus AA shown in Fig. 1, for example) comprising a nonlinear video decomposition unit (which corresponds to a nonlinear video decomposition unit 10 shown in Fig. 1, for example), a structure component encoding unit (which corresponds to a structure component encoding unit 20 shown in Fig. 1, for example), and a texture component encoding unit (which corresponds to a texture component encoding unit 30 shown in Fig. 1, for example), and configured for a digital video configured as a video signal of a pixel value space subjected to spatial and temporal sampling. The video encoding method comprising: first processing in which the nonlinear video decomposition unit decomposes an input video into a structure component and a texture component; second processing in which the structure component encoding unit performs compression encoding processing on the structure component of the input video decomposed by the nonlinear video decomposition unit; and third processing in which the texture component encoding unit performs compression encoding processing on the texture component of the input video decomposed by the nonlinear video decomposition unit.

With the invention, the input video is decomposed into a structure component and a texture component. Furthermore, compression encoding processing is separately performed for each of the structure component and the texture component. This provides improved encoding efficiency.

(20) The present invention proposes a video decoding method used by a video decoding apparatus (which corresponds to a video decoding apparatus BB shown in Fig. 7, for example) comprising a structure component decoding unit (which corresponds to a structure component decoding unit 110 shown in Fig. 7, for example), a texture component decoding unit (which corresponds to a texture component decoding unit 120 shown in Fig. 7, for example), and a nonlinear video composition unit (which corresponds to a nonlinear video composition unit 130 shown in Fig. 7, for example), and configured for a digital video configured as a video signal of a pixel value space subjected to spatial and temporal sampling. The video decoding method comprises: first processing in which the structure component decoding unit decodes compression data of the structure component subjected to the compression encoding processing; second processing in which the texture component decoding unit decodes compression data of the texture component subjected to the compression encoding processing; and third processing in which the nonlinear video composition unit generates a decoded video based on a signal of the structure component decoded by the structure component decoding unit and a signal of the texture component decoded by the texture component decoding unit.

Thus, with the invention, the input video is discomposed into a structure component and a texture component. Furthermore, decoding processing is separately performed on each of the structure component and the texture component which have separately been subjected to compression encoding processing. Furthermore, the decoded results are combined so as to generate a decoded video. This provides improved decoding efficiency.

(21) The present invention proposes a computer program configured to instruct a computer to execute a video encoding method used by a video encoding apparatus (which corresponds to a video encoding apparatus AA shown in Fig. 1, for example) comprising a nonlinear video decomposition unit (which corresponds to a nonlinear video decomposition unit 10 shown in Fig. 1, for example), a structure component encoding unit (which corresponds to a structure component encoding unit 20 shown in Fig. 1, for example), and a texture component encoding unit (which corresponds to a texture component encoding unit 30 shown in Fig. 1, for example), and configured for a digital video configured as a video signal of a pixel value space subjected to spatial and temporal sampling. The computer program instructs the computer to execute: first processing in which the nonlinear video decomposition unit decomposes an input video into a structure component and a texture component; second processing in which the structure component encoding unit performs compression encoding processing on the structure component of the input video decomposed by the nonlinear video decomposition unit; and third processing in which the texture component encoding unit performs compression encoding processing on the texture component of the input video decomposed by the nonlinear video decomposition unit.

With the invention, the input video is decomposed into a structure component and a texture component. Furthermore, compression encoding processing is separately performed for each of the structure component and the texture component. This provides improved encoding efficiency.

(22) The present invention proposes a computer program configured to instruct a computer to execute a video decoding method used by a video decoding apparatus (which corresponds to a video decoding apparatus BB shown in Fig. 7, for example) comprising a structure component decoding unit (which corresponds to a structure component decoding unit 110 shown in Fig. 7, for example), a texture component decoding unit (which corresponds to a texture component decoding unit 120 shown in Fig. 7, for example), and a nonlinear video composition unit (which corresponds to a nonlinear video composition unit 130 shown in Fig. 7, for example), and configured for a digital video configured as a video signal of a pixel value space subjected to spatial and temporal sampling. The computer program instructs the computer to execute: first processing in which the structure component decoding unit decodes compression data of the structure component subjected to compression encoding processing; second processing in which the texture component decoding unit decodes compression data of the texture component subjected to the compression encoding processing; and third processing in which the nonlinear video composition unit generates a decoded video based on a signal of the structure component decoded by the structure component decoding unit and a signal of the texture component decoded by the texture component decoding unit.

Thus, with the invention, the input video is discomposed into a structure component and a texture component. Furthermore, decoding processing is separately performed on each of the structure component and the texture component which have separately been subjected to compression encoding processing. Furthermore, the decoded results are combined so as to generate a decoded video. This provides improved decoding efficiency.

[ADVANTAGE OF THE PRESENT INVENTION]

The present invention provides improved encoding/decoding performance.

[BRIEF DESCRIPTION OF THE DRAWINGS]

Fig. 1 is a block diagram showing a video encoding apparatus according to an embodiment of the present invention.
Fig. 2 is a block diagram showing a structure component encoding unit provided for the video encoding apparatus according to the embodiment.
Fig. 3 is a block diagram showing a texture component encoding unit provided for the video encoding apparatus according to the embodiment.
Fig. 4 is a diagram for describing scaling performed by the texture component encoding unit provided for the video encoding apparatus according to the embodiment.
Fig. 5 is a diagram for describing a method for determining a scanning sequence by use of the texture component encoding unit provided for the video encoding apparatus according to the embodiment.
Fig. 6 is a diagram for describing a method for determining a scanning sequence by use of the texture component encoding unit provided for the video encoding apparatus according to the embodiment.
Fig. 7 is a block diagram showing a video decoding apparatus according to an embodiment of the present invention.
Fig. 8 is a block diagram showing a structure component decoding unit provided for the video decoding apparatus according to the embodiment.
Fig. 9 is a block diagram showing a texture component decoding unit provided for the video decoding apparatus according to the embodiment.
Fig. 10 is a diagram for describing a method for determining a scanning sequence by use of the texture component encoding unit according to a modification.

[BEST MODE FOR CARRYING OUT THE INVENTION]

Description will be made below regarding embodiments of the present invention with reference to the drawings. It should be noted that each of the components of the following embodiments can be replaced by a different known component or the like as appropriate. Also, any kind of variation may be made including a combination with other known components. That is to say, the following embodiments described below do not intend to limit the content of the present invention described in the appended claims.

[Configuration and operation of video encoding apparatus AA]

Fig. 1 is a block diagram showing a video encoding apparatus AA according to an embodiment of the present invention. The video encoding apparatus AA decomposes an input video a into a structure component and a texture component, and separately encodes the components thus decomposed using different encoding methods. The video encoding apparatus AA includes a nonlinear video decomposition unit 10, a structure component encoding unit 20, and a texture component encoding unit 30.

[Configuration and operation of nonlinear video decomposition unit 10]

The nonlinear video decomposition unit 10 receives the input video a as an input signal. The nonlinear video decomposition unit 10 decomposes the input video a into the structure component and the texture component, and outputs the components thus decomposed as a structure component input video e and a texture component input video f. Furthermore, the nonlinear video decomposition unit 10 outputs nonlinear video decomposition information b described later. Detailed description will be made below regarding the operation of the nonlinear video decomposition unit 10.

The nonlinear video decomposition unit 10 performs nonlinear video decomposition so as to decompose the input video a into the structure component and the texture component. The nonlinear video decomposition is performed using the BV-G nonlinear image decomposition model described in Non-patent documents 2 and 3. Description will be made regarding the BV-G nonlinear image decomposition model with an example case in which an image z is decomposed into a BV (bounded variation) component and a G (oscillation) component.

In the BV-G nonlinear image decomposition model, an image is resolved into the sum of the BV component and the G component. Furthermore, modeling is performed with the BV component as u and with the G component as v. Furthermore, the norms of the two components u and v are defined as a TV norm $J(u)$ and a G norm $\|v\|_G$, respectively. This allows such a decomposition problem to be transformed to a variation problem as represented by the following Expressions (1) and (2).

[Expression 1]

$$\inf\left( J(u) + \frac{1}{2\eta} \cdot \|z - u - v\|_2^2 \right), \eta > 0, \mu > 0 \quad \cdots \quad (1)$$

[Expression 2]

$$subject\ to\ v \in G_\mu = \left\{ v \middle\| \|v\|_G \le \mu \right\} \quad \cdots \quad (2)$$

In Expression (1), the parameter $\eta$ represents the residual power, and the parameter $\mu$ represents the upper limit of the G norm of the G component v. The variation problem represented by Expressions (1) and (2) can be transformed into an equivalent variation problem represented by the following Expressions (3) and (4).

[Expression 3]

$$\inf\left( J(u) + J^*\left(\frac{v}{\mu}\right) + \frac{1}{2\eta} \cdot \|z - u - v\|_2^2 \right), \eta > 0, \mu > 0 \quad \cdots \quad (3)$$

[Expression 4]

$$J^*(v) = X_{G_1}(v) = \begin{cases} 0, if\ v \in G_1 \\ +\infty, if\ v \notin G_1 \end{cases} \quad \cdots \quad (4)$$

In Expressions (3) and (4), the functional $J^*$ represents an indicator functional in the G1 space. Solving Expressions (3) and (4) is equivalent to solving the partial variation problems represented by the following Expressions (5) and (6) at the same time. It should be noted that Expression (5) represents a partial variation problem in that u is sought assuming that v is known. Expression (6) represents a partial variation problem in that v is sought assuming that u is known.

[Expression 5]

$$\inf\left( J(u)+\frac{1}{2\eta}\cdot\|z-u-v\|_2^2 \right) \cdots \quad (5)$$

[Expression 6]

$$\inf\left(\|z-u-v\|_2^2\right), subject\ to\ v \in G_\mu \cdots \quad (6)$$

The two partial variation problems represented by Expressions (5) and (6) can be easily solved using the projection method proposed by Chambolle.

The nonlinear video decomposition unit 10 decomposes the input video a for every N (N represents a desired integer which is equal to or greater than 1) frames with respect to the spatial direction and the temporal direction based on the nonlinear video decomposition technique described above. The nonlinear video decomposition unit 10 outputs the video data thus decomposed as the structure component input video e and the texture component input video f. Here, N represents a unit of frames to be subjected to nonlinear decomposition in the temporal direction. The nonlinear video decomposition unit 10 outputs the value N as the aforementioned nonlinear video decomposition information b.

[Configuration and operation of structure component encoding unit 20]

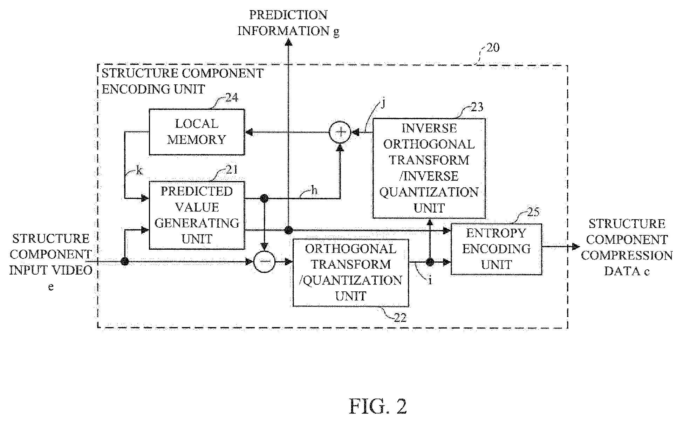

Fig. 2 is a block diagram showing a structure component encoding unit 20. The structure component encoding unit 20 performs compression encoding processing on the structure component input video e that corresponds to the structure component of the input video a, and outputs the structure component input video e thus processed as structure component compression data c. Furthermore, the structure component encoding unit 20 outputs prediction information g including motion vector information to be used to perform inter-frame prediction for the structure component of the input video a. The structure component encoding unit 20 includes a predicted value generating unit 21, an orthogonal transform/quantization unit 22, and an inverse orthogonal transform/inverse quantization unit 23, local memory 24, and an entropy encoding unit 25.

The predicted value generating unit 21 receives, as its input signals, the structure component input video e and a local decoded video k output from the local memory 24 as described later. The predicted value generating unit 21 performs motion compensation prediction in a pixel domain using the information thus input, so as to select a prediction method having a highest encoding efficiency from among multiple kinds of prediction methods prepared beforehand. Furthermore, the predicted value generating unit 21 generates a predicted value h based on the inter-frame prediction in the pixel domain using the prediction method thus selected. Moreover, the predicted value generating unit 21 outputs the predicted value h, and outputs, as prediction information g, the information that indicates the prediction method used to generate the predicted value h. The prediction information g includes information with respect to a motion vector obtained for a processing block set for the structure component of the input video a.

The orthogonal transform/quantization unit 22 receives, as its input signal, a difference signal (residual signal) between the structure component input video e and the predicted value h. The orthogonal transform/quantization unit 22 performs an orthogonal transform of the residual signal thus input, performs quantization processing on the transform coefficients, and outputs the calculation result as a residual signal j subjected to inverse quantization and inverse orthogonal transform.

The local memory 24 receives a local decoded video as input data. The local decoded video represents sum information of the predicted value h and the residual signal j subjected to inverse quantization and inverse orthogonal transformation. The local memory 24 stores the local decoded video thus input, and outputs the local decoded video as a local decoded video k at an appropriate timing.

The entropy encoding unit 25 receives, as its input signals, the prediction information g and the residual signal i thus quantized and transformed. The entropy encoding unit 25 encodes the input information using a variable-length encoding method or an arithmetic encoding method, and writes the encoded result in the form of a compressed data stream according to an encoding syntax, and outputs the compressed data stream as the structure component compressed data c.

[Configuration and operation of texture component encoding unit 30]

Fig. 3 is a block diagram showing a texture component encoding unit 30. The texture component encoding unit 30 performs compression encoding processing on the texture component input video f that corresponds to the texture component of the input video a, and outputs the texture component input video f thus processed as texture component compression data d. The texture component encoding unit 30 includes an orthogonal transform unit 31, a predicted value generating unit 32, a quantization unit 33, an inverse quantization unit 34, local memory 35, and an entropy encoding unit 36.

The orthogonal transform unit 31 receives the texture component input video f as its input data. The orthogonal transform unit 31 performs an orthogonal transform such as DST (Discrete Sine Transform) or the like on the texture component input video f thus input, and outputs coefficient information thus transformed as the orthogonal transform coefficient m. It should be noted that, instead of DST, other kinds of orthogonal transforms based on different KL transforms such as DCT (Discrete Cosine Transform) or the like may be employed.

The predicted value generating unit 32 receives, as its input data, the orthogonal transform coefficient m, the orthogonal transform coefficient r output from the local memory 35 after it is subjected to local decoding as described later, and the prediction information g output from the predicted value generating unit 21 of the structure component encoding unit 20. The predicted value generating unit 32 performs motion compensation prediction in the frequency domain using the information thus input, selects a prediction method having a highest encoding efficiency from among multiple kinds of prediction methods prepared beforehand, and generates a predicted value n based on the inter-frame prediction in the frequency domain using the prediction method thus selected. Furthermore, the predicted value generating unit 32 outputs the predicted value n, and outputs, as prediction information o, the information which indicates the prediction method used to generate the predicted value n. It should be noted that, in the motion compensation prediction in the frequency domain, the predicted value generating unit 32 uses a motion vector in the processing block with respect to the structure component of the input video a generated by the predicted value generating unit 21 of the structure component encoding unit 20.

It should be noted that the orthogonal transform coefficient m is obtained by performing an orthogonal transform on the texture component input video f in the temporal direction. Thus, there is a difference in the unit of processing in the temporal direction between the orthogonal transform processing for the structure component and the orthogonal transform processing for the texture component. In a case in which the predicted value generating unit 32 uses the motion vector itself, as generated by the predicted value generating unit 21 of the structure component encoding unit 20, i.e., the motion vector with respect to the structure component, in some cases, this leads to a problem of reduced encoding efficiency.

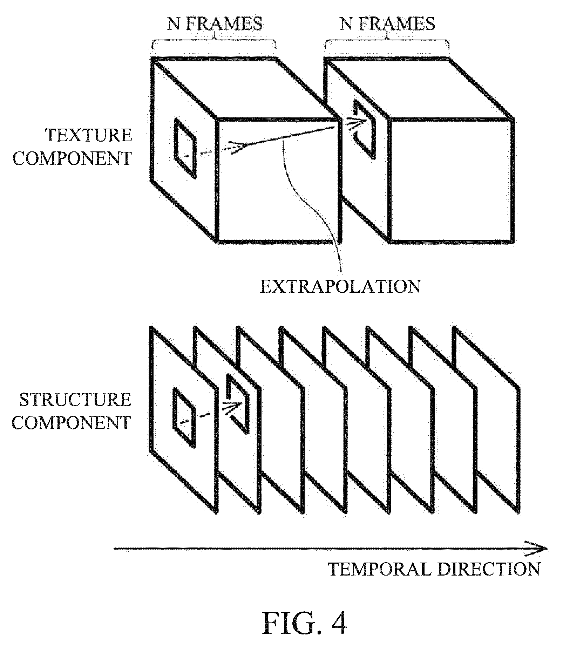

In a case in which temporal-direction prediction is performed for the texture component, the prediction processing interval corresponds to a unit (N frames as described above) to be subjected to the orthogonal transform in the temporal direction. Thus, before using the motion vector obtained for the structure component, scaling of this motion vector is performed such that it functions as a reference for an N-th subsequent frame. Subsequently, the predicted value generating unit 32 performs temporal-direction prediction for the texture component using the motion vector thus interpolated or otherwise extrapolated in the scaling. As an example, Fig. 4 shows an arrangement configured to extrapolate the motion vector obtained for the structure component.

Returning to Fig. 3, the quantization unit 33 receives, as its input signal, a difference signal (residual signal) between the orthogonal transform coefficient m and the predicted value n. The quantization unit 33 performs quantization processing on the residual signal thus input, and outputs the residual signal thus quantized as a residual signal p.

The inverse quantization unit 34 receives, as its input signal, the residual signal p thus quantized. The inverse quantization unit 34 performs inverse quantization processing on the residual signal p thus quantized, and outputs the residual signal q subjected to the inverse quantization.

The local memory 35 receives a local decoded video as its input data. The local decoded video represents sum information of the predicted value n and the inverse-quantized residual signal q. The local memory 35 stores the local decoded video thus input, and outputs the data thus stored as a local decoded orthogonal transform coefficient r at an appropriate timing.

The entropy encoding unit 36 receives, as its input signals, the prediction information o, the quantized residual signal p, and the prediction information g output from the predicted value generating unit 21 of the structure component encoding unit 20. The entropy encoding unit 36 generates and outputs the texture component compression data d in the same way as the entropy encoding unit 25 shown in Fig. 2.

It should be noted that the quantized residual signal p, which is the target signal to be subjected to the entropy encoding, is configured as three-dimensional coefficient information consisting of the horizontal direction, vertical direction, and the temporal direction. Thus, the entropy encoding unit 36 determines a sequence for scanning the texture component based on the motion vector generated by the predicted value generating unit 21 of the structure component encoding unit 20, i.e., the change in the motion vector obtained for the structure component. The quantized residual signal p is converted into one-dimensional data according to the scanning sequence thus determined.

Specifically, first, the entropy encoding unit 36 calculates the area of a region defined by the motion vectors within N processing frames based on the prediction information g output from the predicted value generating unit 21 of the structure component encoding unit 20.

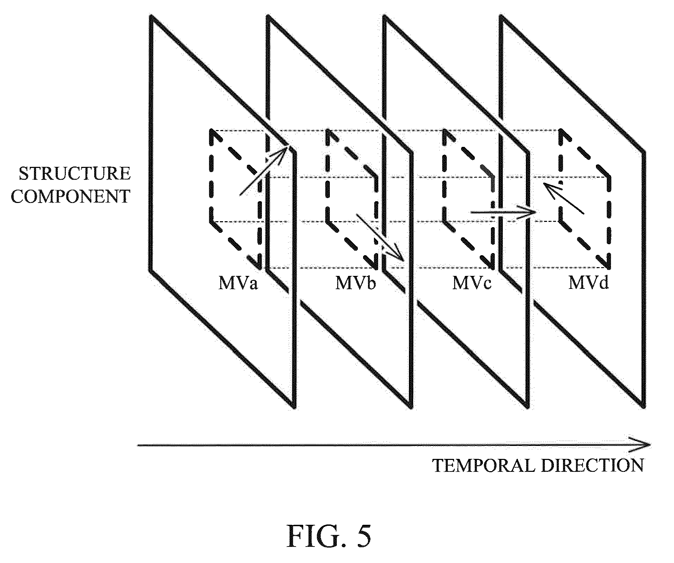

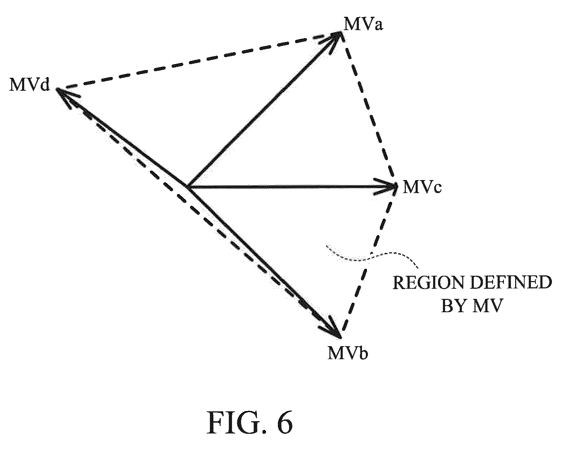

Description will be made with reference to Figs. 5 and 6 regarding the area of a region defined by the motion vectors obtained within the processing frames in a case in which N = 4 as an example. In Fig. 5, MVa, MVb, MVc, and MVd each represent a motion vector acquired for the processing frame in the corresponding one of the four frames. The entropy encoding unit 36 arranges the motion vectors MVa, MVb, MVc, and MVd such that their start points match each other as shown in Fig. 6. Furthermore, the entropy encoding unit 36 calculates a polygonal shape configured such that it is circumscribed by the endpoints of the motion vectors and has a minimum area, and acquires the area of the polygonal shape thus calculated.

Next, the entropy encoding unit 36 determines a scanning sequence according to the area thus acquired. Specifically, the entropy encoding unit 36 stores multiple threshold values prepared beforehand and multiple scanning sequences prepared beforehand. The entropy encoding unit 36 selects one from among the multiple scanning sequences thus prepared beforehand based on the magnitude relation between the threshold value and the area thus acquired, thereby determining the scanning sequence thus selected. Examples of such scanning sequences prepared beforehand include a scanning sequence in which scanning is performed with a relatively higher priority level assigned to the temporal direction, and a scanning sequence in which scanning is performed with a relatively higher priority level assigned to the spatial direction. With such an arrangement, when the area thus acquired is large, judgment is made that there is a large motion. Thus, in this case, such an arrangement selects a scanning sequence in which scanning is performed with a relatively higher priority level assigned to the temporal direction. Conversely, when the area thus acquired is small, judgment is made that there is a small motion. In this case, such an arrangement selects a scanning sequence in which scanning is performed with a relatively higher priority level assigned to the spatial direction.

[Configuration and operation of video decoding apparatus BB]

Fig. 7 is a block diagram showing a video decoding apparatus BB according to an embodiment of the present invention. The video decoding apparatus BB decodes the structure component compression data c, which corresponds to data obtained by encoding the structure component of the input video a by use of the video encoding apparatus AA, and the texture component compression data d, which corresponds to data obtained by encoding the texture component of the input video a by use of the video encoding apparatus AA, and combines the decoded results so as to generate a decoded video A. The video decoding apparatus BB includes a structure component decoding unit 110, a texture component decoding unit 120, and a nonlinear video composition unit 130.

[Configuration and operation of structure component decoding unit 110]

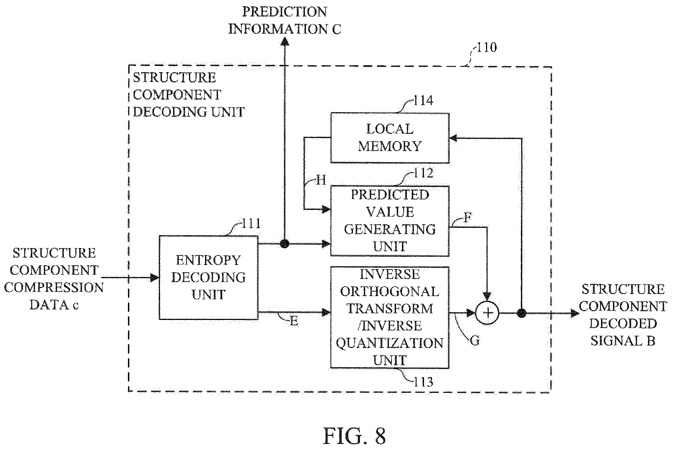

Fig. 8 is a block diagram showing the structure component decoding unit 110. The structure component decoding unit 110 decodes the structure component compression data c, which corresponds to data obtained by encoding the structure component of the input video a by use of the video encoding apparatus AA, and outputs the structure component of the input video a thus decoded as a structure component decoded signal B. Furthermore, the structure component decoding unit 110 outputs prediction information C including the motion vector information used in the inter-frame prediction for the structure component of the input video a. The structure component decoding unit 110 includes an entropy decoding unit 111, a predicted value generating unit 112, an inverse orthogonal transform/inverse quantization unit 113, and local memory 114.

The entropy decoding unit 111 receives the structure component compression data c as its input data. The entropy decoding unit 111 decodes the structure component compression data c using a variable-length encoding method or an arithmetic encoding method, and acquires and outputs the prediction information C and the residual signal E.

The predicted value generating unit 112 receives, as its input data, the prediction information C and a decoded video H output from the local memory 114 as described later. The predicted value generating unit 112 generates a predicted value F based on the decoded video H according to the prediction information C, and outputs the predicted value F thus generated.

The inverse orthogonal transform/inverse quantization unit 113 receives the residual signal E as its input signal. The inverse orthogonal transform/inverse quantization unit 113 performs inverse transform processing and inverse quantization processing on the residual signal E, and outputs the residual signal thus subjected to inverse orthogonal transformation and inverse quantization as a residual signal G.

The local memory 114 receives the structure component decoded signal B as its input signal. The structure component decoded signal B represents sum information of the predicted value F and the residual signal G. The local memory 114 stores the structure component decoded signal B thus input, and outputs the structure component decoded signal thus stored as a decoded video H at an appropriate timing.

[Configuration and operation of texture component decoding unit 120]

Fig. 9 is a block diagram showing the texture component decoding unit 120. The texture component decoding unit 120 decodes the texture component compression data d, which corresponds to data obtained by encoding the texture component of the input video a by use of the video encoding apparatus AA, and outputs the texture component compression data thus decoded as a texture component decoded signal D. The texture component decoding unit 120 includes an entropy decoding unit 121, a predicted value generating unit 122, an inverse quantization unit 123, local memory 124, and an inverse orthogonal transform unit 125.

The entropy decoding unit 121 receives the texture component compression data d as its input data. The entropy decoding unit 121 decodes the texture component compression data d using a variable-length encoding method or an arithmetic encoding method, so as to acquire and output a residual signal I.

The predicted value generating unit 122 receives, as its input data, the prediction information C output from the entropy decoding unit 111 of the structure component decoding unit 110 and the transform coefficient M obtained for a processed frame and output from the local memory 124 as described later. The predicted value generating unit 122 generates a predicted value J based on the transform coefficient M obtained for the processed frame according to the prediction information C, and outputs the predicted value J thus generated. It should be noted that the predicted value generating unit 122 generates the predicted value J in the frequency domain. In this operation, the predicted value generating unit 122 uses the motion vector generated by the predicted value generating unit 112 of the structure component decoding unit 110 after it is subjected to scaling in the same way as the predicted value generating unit 32 shown in Fig. 3.

The inverse quantization unit 123 receives the residual signal I as its input signal. The inverse quantization unit 123 performs inverse quantization processing on the residual signal I, and outputs the residual signal thus subjected to inverse quantization as a residual signal K.

The local memory 124 receives, as its input signal, the texture component decoded signal L in the frequency domain. The texture component decoded signal L in the frequency domain is configured as sum information of the predicted value J and the residual signal K. The local memory 124 stores the texture component decoded signal L in the frequency domain thus input, and outputs, at an appropriate timing, the texture component decoded signal thus stored as the transform coefficient M for the processed frame.

The inverse orthogonal transform unit 125 receives, as its input signal, the texture component decoded signal L in the frequency domain. The inverse orthogonal transform unit 125 performs inverse orthogonal transform processing on the texture component decoded signal L in the frequency domain thus input, which corresponds to the orthogonal transform processing performed by the orthogonal transform unit 31 shown in Fig. 3, and outputs the texture component decoded signal thus subjected to inverse orthogonal transform processing as a texture component decoded signal D.

[Configuration and operation of nonlinear video composition unit 130]

Returning to Fig. 7, the nonlinear video composition unit 130 receives, as its input signals, the structure component decoded signal B and the texture component decoded signal D. The nonlinear video composition unit 130 calculates the sum of the structure component decoded signal B and the texture component decoded signal D for every N frames as described in Non-patent documents 2 and 3, so as to generate the decoded video A.

With the aforementioned video encoding apparatus AA, such an arrangement provides the following advantages.

Here, investigation will be made below regarding an arrangement configured to decompose an input video into a structure component and a texture component. The structure component of the input video has a high correlation between adjacent pixels. Furthermore, texture variation in the pixel values is removed from the structure component in the temporal direction. Thus, in a case of performing compression encoding processing on the structure component using a conventional video compression technique based on temporal-direction prediction, such an arrangement provides high-efficiency encoding. On the other hand, the texture component of the input video has a low correlation between adjacent pixels in both the spatial direction and the temporal direction. However, such an arrangement may employ three-dimensional orthogonal transform processing in the spatial direction and the temporal direction using a suitable orthogonal transform algorithm or otherwise may employ temporal prediction for a transform coefficient using a coefficient obtained in two-dimensional orthogonal transform processing in the spatial direction assuming that noise due to the texture component occurs according to a predetermined model, thereby providing high-efficiency encoding of the texture component.

Thus, the video encoding apparatus AA decomposes the input video a into the structure component and the texture component. Furthermore, the video encoding apparatus AA separately performs compression encoding processing on each of the structure component and the texture component. Thus, the video encoding apparatus AA provides improved encoding efficiency. As the frame rate of the input video a becomes higher, the effect of texture change in the pixel values in the temporal direction becomes greater. Thus, in particular, such an arrangement provides markedly improved encoding efficiency for an input video a having a high frame rate.

Furthermore, the video encoding apparatus AA generates the predicted value n of the texture component of the input video a in the frequency domain based on inter-frame prediction. Subsequently, the video encoding apparatus AA generates compression data for the texture component of the input video a using the predicted value n thus generated. Thus, such an arrangement is capable of performing compression encoding processing on the texture component of the input video a.

Furthermore, the video encoding apparatus AA uses the motion vector obtained for the structure component of the input video a to perform compression encoding processing on the texture component of the input video a. Thus, there is no need to newly calculate the motion vector for the texture component of the input video a. Thus, such an arrangement is capable of reducing an amount of encoding information used for the temporal-direction prediction for the texture component.

Furthermore, the video encoding apparatus AA interpolates or otherwise extrapolates the motion vector obtained for the structure component of the input video a according to the frame interval between the processing frame and the reference frame such that it matches a frame interval used as a unit of orthogonal transform processing in the temporal direction. Thus, such an arrangement provides scaling from the motion vector obtained for the structure component of the input video a to the motion vector for the texture component which is to be processed in the temporal direction in a unit of processing that differs from that used in the processing for the structure component. Thus, such an arrangement suppresses degradation in encoding efficiency.

Furthermore, the video encoding apparatus AA determines a scanning sequence for the texture component based on the area of a region defined by the motion vectors obtained for the structure component of the input video a. Specifically, judgment is made whether or not there is a large motion in a given region based on the area of a region defined by the motion vectors obtained for the structure component of the input video a. Thus, such an arrangement is capable of determining a scanning sequence based on the judgment result.

Furthermore, the video encoding apparatus AA is capable of performing compression encoding processing on the structure component of the input video a in the pixel domain. In contrast, the video encoding apparatus AA is capable of performing compression encoding processing on the texture component of the input video a in the frequency domain.

Furthermore, the video encoding apparatus AA is capable of performing compression encoding processing using a prediction encoding technique on a block basis.

Such a video decoding apparatus BB described above provides the following advantages.

The video decoding apparatus BB decomposes the input video a into the structure component and the texture component. Furthermore, the video decoding apparatus BB separately decodes each of the structure component and the texture component that have separately been subjected to compression encoding processing. Subsequently, the video decoding apparatus BB combines the decoded results so as to generate the decoded video A. Thus, the video decoding apparatus BB provides improved decoding efficiency. As the frame rate of the input video a becomes higher, the effect of texture change in the pixel values in the temporal direction becomes greater. Thus, in particular, such an arrangement provides markedly improved encoding efficiency for an input video a having a high frame rate.

Furthermore, the video decoding apparatus BB generates the predicted value J based on the inter-frame prediction in the frequency domain after it performs entropy decoding processing on the texture component compression data d. Furthermore, the video decoding apparatus BB generates the texture component of the decoded video A using the predicted value J. Thus, the video decoding apparatus BB is capable of calculating the texture component of the decoded video A.

Furthermore, the video decoding apparatus BB also uses the motion vector, which is used for the inter-frame prediction in the decoding processing on the structure component compression data c, to decode the texture component compression data d. Thus, there is no need to newly calculate the motion vector used for the inter-frame prediction in the decoding processing on the structure component compression data c. Thus, such an arrangement is capable of reducing an amount of encoding information used for the temporal-direction prediction for the texture component.

Furthermore, the video decoding apparatus BB interpolates or otherwise extrapolates the motion vector used for the inter-frame prediction in the decoding processing on the structure component compression data c according to the frame interval between the processing frame and the reference frame such that it matches a frame interval used as a unit of orthogonal transform processing in the temporal direction. Thus, such an arrangement provides scaling from the motion vector used in the inter-frame prediction in the decoding processing on the structure component compression data c to the motion vector for the texture component which is to be processed in the temporal direction in a unit of processing that differs from that used in the processing on the structure component. Thus, such an arrangement suppresses degradation in decoding efficiency.

Furthermore, the video decoding apparatus BB determines a scanning sequence for the texture component based on the area of a region defined by the motion vectors used in the inter-frame prediction in the decoding processing for the structure component compression data c. Specifically, judgment is made whether or not there is a large motion in a given region based on the area of a region defined by the motion vectors used in the inter-frame prediction in the decoding processing on the structure component compression data c. Thus, such an arrangement is capable of determining a scanning sequence based on the judgment result.

Furthermore, the video decoding apparatus BB is capable of decoding the structure component compression data c in the pixel domain. In contrast, the video decoding apparatus BB is capable of decoding the texture component compression data d in the frequency domain.

Furthermore, the video decoding apparatus BB is capable of performing decoding processing using a prediction decoding technique on a block basis.

It should be noted that the operation of the video encoding apparatus AA or the operation of the video decoding apparatus BB may be recorded on a computer-readable non-temporary recording medium, and the video encoding apparatus AA or the video decoding apparatus BB may read out and execute the programs recorded on the recording medium, which provides the present invention.

Here, examples of the aforementioned recording medium include nonvolatile memory such as EPROM, flash memory, and the like, a magnetic disk such as a hard disk, and CD-ROM and the like. Also, the programs recorded on the recording medium may be read out and executed by a processor provided to the video encoding apparatus AA or a processor provided to the video decoding apparatus BB.

Also, the aforementioned program may be transmitted from the video encoding apparatus AA or the video decoding apparatus BB, which stores the program in a storage device or the like, to another computer system via a transmission medium or transmission wave used in a transmission medium. The term "transmission medium" as used here represents a medium having a function of transmitting information, examples of which include a network (communication network) such as the Internet, etc., and a communication link (communication line) such as a phone line, etc.

Also, the aforementioned program may be configured to provide a part of the aforementioned functions. Also, the aforementioned program may be configured to provide the aforementioned functions in combination with a different program already stored in the video encoding apparatus AA or the video decoding apparatus BB. That is to say, the aforementioned program may be configured as a so-called differential file (differential program).

Detailed description has been made above regarding the embodiments of the present invention with reference to the drawings. However, the specific configuration thereof is not restricted to the above-described embodiments. Rather, various kinds of design change may be made without departing from the spirit of the present invention.

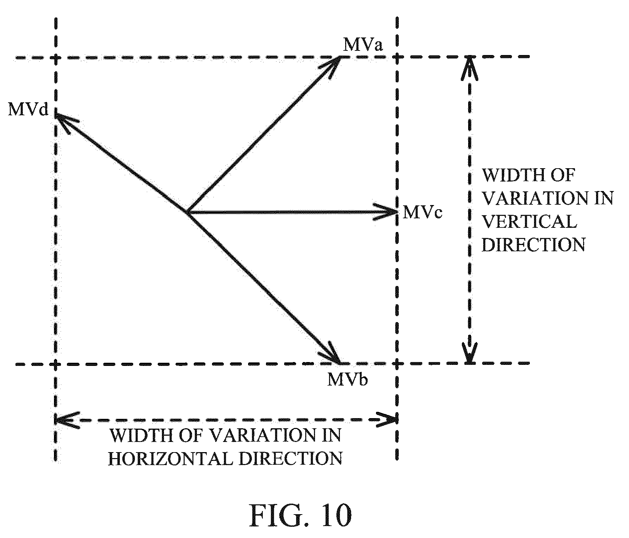

For example, description has been made in the aforementioned embodiment with reference to Fig. 6 regarding an arrangement in which the entropy encoding unit 36 shown in Fig. 3 determines a scanning sequence based on the area of a region defined by the motion vectors calculated within processing frames within N frames. However, the present invention is not restricted to such an arrangement. For example, as shown in Fig. 10, the scanning sequence may be determined based on the width of variation in the motion vector in the horizontal direction and in the vertical direction.

In a case in which the scanning sequence is determined based on the width of variation in the motion vector in the horizontal direction and in the vertical direction as described above, the entropy encoding unit 36 arranges the motion vectors such that their start points match each other as shown in Fig. 10, and calculates the width of variation in the motion vector for each of the horizontal direction and the vertical direction. Subsequently, the scanning sequence is determined based on the widths of variation thus calculated. With such an arrangement, determination is made whether or not there is a large motion in a given region based on the horizontal-direction variation and the vertical-direction variation in the motion vector obtained for the structure component of the input video. Subsequently, a suitable scanning sequence is determined based on the judgment result. Also, in the decoding of the structure component compression data c, judgment is made whether or not there is a large motion in a given region based on the horizontal-direction variation and the vertical-direction variation in the motion vector used in the inter-frame prediction. Thus, a suitable scanning sequence may be determined based on the judgment result.

[DESCRIPTION OF THE REFERENCE NUMERALS]

10 nonlinear video decomposition unit, 20 structure component encoding unit, 30 texture component encoding unit, 110 structure component decoding unit, 120 texture component decoding unit, 130 nonlinear video composition unit, AA video encoding apparatus, BB video decoding apparatus.

**Claims**

1. A video encoding apparatus for a digital video configured as a video signal of a pixel value space subjected to spatial and temporal sampling, the video encoding apparatus comprising:

a nonlinear video decomposition unit that decomposes an input video into a structure component and a texture component;
a structure component encoding unit that performs compression encoding processing on the structure component of the input video decomposed by the nonlinear video decomposition unit; and
a texture component encoding unit that performs compression encoding processing on the texture component of the input video decomposed by the nonlinear video decomposition unit.

2. The video encoding apparatus according to Claim 1, wherein the texture component encoding unit comprises:

an orthogonal transform unit that performs orthogonal transform processing on the texture component of the input video decomposed by the nonlinear video decomposition unit;
a predicted value generating unit that generates a predicted value of the texture component of the input video thus subjected to the orthogonal transform processing by use of the orthogonal transform unit, based on inter-frame prediction in a frequency domain;
a quantization unit that performs quantization processing on a difference signal that represents a difference between the texture component of the input video thus subjected to the orthogonal transform processing by use of the orthogonal transform unit and the predicted value generated by the predicted value generating unit; and
an entropy encoding unit that performs entropy encoding of the difference signal thus quantized by the quantization unit.

3. The video encoding apparatus according to Claim 2, wherein the structure component encoding unit calculates a motion vector used in inter-frame prediction when the structure component of the input video is subjected to the compression encoding processing,
wherein the predicted value generating unit extrapolates or otherwise interpolates the motion vector according to a frame interval between a reference frame and a processing frame for the motion vector calculated by the structure component encoding unit such that it matches a frame interval used as a unit of orthogonal transform processing in the temporal direction,
and wherein the predicted value generating unit performs inter-frame prediction using the motion vector thus obtained by extrapolation or otherwise by interpolation.

4. The video encoding apparatus according to Claim 2 or 3, wherein the structure component encoding unit calculates a motion vector used in inter-frame prediction when the structure component of the input video is subjected to the compression encoding processing,
and wherein the entropy encoding unit determines a scanning sequence for the texture component based on a plurality of motion vectors in a region that corresponds to a processing block for the entropy encoding after the plurality of motion vectors are calculated by the structure component encoding unit.

5. The video encoding apparatus according to Claim 4, wherein the entropy encoding unit calculates an area of a region defined by the plurality of motion vectors in a region that corresponds to the processing block for the entropy encoding after the motion vectors are obtained by the structure component encoding unit,
and wherein the entropy encoding unit determines the scanning sequence based on the area thus calculated.

6. The video encoding apparatus according to Claim 4, wherein the entropy encoding unit calculates, for each of the horizontal direction and the vertical direction, an amount of variation in the plurality of motion vectors in a region that corresponds to the processing block for the entropy encoding after the motion vectors are obtained by the structure component encoding unit,
and wherein the entropy encoding unit determines the scanning sequence based on the amount of variation thus calculated.

7. The video encoding apparatus according to any one of Claims 1 through 6, wherein the structure component encoding unit performs, in a pixel domain, the compression encoding processing on the structure component of the input video obtained by decomposing the input video by use of the nonlinear video decomposition unit.

8. The video encoding apparatus according to any one of Claims 1 through 7, wherein the texture component encoding unit performs, in a frequency domain, the compression encoding processing on the texture component of the input video obtained by decomposing the input video by use of the nonlinear video decomposition unit.

9. The video encoding apparatus according to any one of Claims 1 through 8, wherein the structure component encoding unit performs the compression encoding processing using a prediction encoding technique on a block basis.

10. A video decoding apparatus for a digital video configured as a video signal of a pixel value space subjected to spatial and temporal sampling, the video decoding apparatus comprising:

a structure component decoding unit that decodes compression data of a structure component subjected to compression encoding processing;

a texture component decoding unit that decodes compression data of a texture component subjected to the compression encoding processing; and

a nonlinear video composition unit that generates a decoded video based on a signal of the structure component decoded by the structure component decoding unit and a signal of the texture component decoded by the texture component decoding unit.

11. The video decoding apparatus according to Claim 10, wherein the texture component decoding unit comprises:

an entropy decoding unit that performs entropy decoding processing on the compression data of the texture component subjected to the compression encoding processing;

a predicted value generating unit that generates a predicted value with respect to the signal of the texture component decoded by the entropy decoding unit based on inter-frame prediction in a frequency domain;

an inverse quantization unit that performs inverse quantization processing on the signal of the texture component decoded by the entropy decoding unit; and

an inverse orthogonal transform unit that performs inverse orthogonal transform processing on sum information of the predicted value generated by the predicted value generating unit and the signal of the texture component subjected to inverse quantization processing by use of the inverse quantization unit.

12. The video decoding apparatus according to Claim 11, wherein the structure component decoding unit calculates a motion vector used in inter-frame prediction when the structure component decoding unit decodes the compression data of the structure component subjected to the compression encoding processing,

wherein the predicted value generating unit extrapolates or otherwise interpolates the motion vector according to a frame interval between a reference frame and a processing frame for the motion vector calculated by the structure component decoding unit such that it matches a frame interval used as a unit of orthogonal transform processing in the temporal direction,

and wherein the predicted value generating unit performs inter-frame prediction using the motion vector thus obtained by extrapolation or otherwise interpolation.

13. The video decoding apparatus according to Claim 11 or 12, wherein the structure component decoding unit calculates a motion vector used in inter-frame prediction when the compression data of the structure component subjected to the compression encoding processing is decoded,

and wherein the entropy decoding unit determines a scanning sequence for the texture component based on a plurality of motion vectors in a region that corresponds to a processing block for the entropy decoding after the plurality of motion vectors are calculated by the structure component decoding unit.

14. The video decoding apparatus according to Claim 13, wherein the entropy decoding unit calculates an area of a region defined by the plurality of motion vectors in a region that corresponds to the processing block for the entropy decoding after the motion vectors are obtained by the structure component decoding unit,

and wherein the entropy decoding unit determines the scanning sequence based on the area thus calculated.

15. The video decoding apparatus according to Claim 13, wherein the entropy decoding unit calculates, for each of the horizontal direction and the vertical direction, an amount of variation in the plurality of motion vectors in a region that corresponds to the processing block for the entropy decoding after the motion vectors are obtained by the structure component decoding unit,

and wherein the entropy decoding unit determines the scanning sequence based on the amount of variation thus calculated.

16. The video decoding apparatus according to any one of Claims 10 through 15, wherein the structure component decoding unit decodes, in a pixel domain, the compression data of the structure component subjected to the compression encoding processing.

17. The video decoding apparatus according to any one of Claims 10 through 16, wherein the texture component decoding unit decodes, in a frequency domain, the compression data of the texture component subjected to the compression encoding processing.

18. The video decoding apparatus according to any one of Claims 10 through 17, wherein the structure component decoding unit performs the decoding processing using a prediction decoding technique on a block basis.

19. A video encoding method used by a video encoding apparatus comprising a nonlinear video decomposition unit, a structure component encoding unit, and a texture component encoding unit, and configured for a digital video configured as a video signal of a pixel value space subjected to spatial and temporal sampling, the video encoding method comprising:

first processing in which the nonlinear video decomposition unit decomposes an input video into a structure component and a texture component;
second processing in which the structure component encoding unit performs compression encoding processing on the structure component of the input video decomposed by the nonlinear video decomposition unit; and
third processing in which the texture component encoding unit performs compression encoding processing on the texture component of the input video decomposed by the nonlinear video decomposition unit.

20. A video decoding method used by a video decoding apparatus comprising a structure component decoding unit, a texture component decoding unit, and a nonlinear video composition unit, and configured for a digital video configured as a video signal of a pixel value space subjected to spatial and temporal sampling, the video decoding method comprising:

first processing in which the structure component decoding unit decodes compression data of the structure component subjected to the compression encoding processing;
second processing in which the texture component decoding unit decodes compression data of the texture component subjected to the compression encoding processing; and
third processing in which the nonlinear video composition unit generates a decoded video based on a signal of the structure component decoded by the structure component decoding unit and a signal of the texture component decoded by the texture component decoding unit.

21. A computer program configured to instruct a computer to execute a video encoding method used by a video encoding apparatus comprising a nonlinear video decomposition unit, a structure component encoding unit, and a texture component encoding unit, and configured for a digital video configured as a video signal of a pixel value space subjected to spatial and temporal sampling, wherein the computer program instructs the computer to execute:

first processing in which the nonlinear video decomposition unit decomposes an input video into a structure component and a texture component;
second processing in which the structure component encoding unit performs compression encoding processing on the structure component of the input video decomposed by the nonlinear video decomposition unit; and
third processing in which the texture component encoding unit performs compression encoding processing on the texture component of the input video decomposed by the nonlinear video decomposition unit.

22. A computer program configured to instruct a computer to execute a video decoding method used by a video decoding apparatus comprising a structure component decoding unit, a texture component decoding unit, and a nonlinear video composition unit, and configured for a digital video configured as a video signal of a pixel value space subjected to spatial and temporal sampling, wherein the computer program instructs the computer to execute:

first processing in which the structure component decoding unit decodes compression data of the structure component subjected to compression encoding processing;
second processing in which the texture component decoding unit decodes compression data of the texture component subjected to the compression encoding processing; and
third processing in which the nonlinear video composition unit generates a decoded video based on a signal of the structure component decoded by the structure component decoding unit and a signal of the texture component decoded by the texture component decoding unit.

VIDEO ENCODING APPARATUS

10

NONLINEAR VIDEO DECOMPOSITION UNIT

TEXTURE COMPONENT ENCODING UNIT

30

STRUCTURE COMPONENT ENCODING UNIT

20

INPUT VIDEO a

f

e

g

AA

TEXTURE COMPONENT COMPRESSION DATA d

STRUCTURE COMPONENT COMPRESSION DATA c

NONLINEAR VIDEO DECOMPOSITION INFORMATION b

FIG. 1

FIG. 2

FIG. 3

FIG. 4

FIG. 5

MVa

MVd

MVc

REGION DEFINED
BY MV

MVb

FIG. 6

FIG. 7

FIG. 8

FIG. 9

FIG. 10

## INTERNATIONAL SEARCH REPORT

| International application No. |
| --- |
| PCT/JP2014/058087 |

| A. CLASSIFICATION OF SUBJECT MATTER |
| --- |
| *H04N19/30*(2014.01)i |
| According to International Patent Classification (IPC) or to both national classification and IPC |

| B. FIELDS SEARCHED |
| --- |
| Minimum documentation searched (classification system followed by classification symbols) |
| H04N19/00-19/98 |

| Documentation searched other than minimum documentation to the extent that such documents are included in the fields searched |
| --- |
| Jitsuyo Shinan Koho        1922-1996   Jitsuyo Shinan Toroku Koho   1996-2014 |
| Kokai Jitsuyo Shinan Koho   1971-2014   Toroku Jitsuyo Shinan Koho   1994-2014 |

| Electronic data base consulted during the international search (name of data base and, where practicable, search terms used) |
| --- |
| |

### C.   DOCUMENTS CONSIDERED TO BE RELEVANT

| Category* | Citation of document, with indication, where appropriate, of the relevant passages | Relevant to claim No. |
| --- | --- | --- |
| X<br>Y | JP 2007-184800 A  (Hitachi, Ltd.),<br>19 July 2007 (19.07.2007),<br>abstract; paragraphs [0008] to [0010], [0013]<br>to [0069]; fig. 1 to 11<br>& US 2007/0160298 A1    & CN 101001381 A | 1,7-10,16-22<br>2,11 |
| X<br>Y | JP 2010-004375 A  (Victor Company of Japan,<br>Ltd.),<br>07 January 2010 (07.01.2010),<br>abstract; paragraphs [0025] to [0080]; fig. 1<br>to 3, 5 to 9<br>(Family: none) | 1,7-10,16-22<br>2,11 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 28 May, 2014 (28.05.14) | 17 June, 2014 (17.06.14) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

## INTERNATIONAL SEARCH REPORT

International application No.

PCT/JP2014/058087

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2001-503584 A (Thomson Multimedia), 13 March 2001 (13.03.2001), fig. 1, 7 & WO 1998/020457 A1    & EP 937291 A1 & KR 10-2000-0053028 A  & CN 1236461 A | 2,11 |
| A | Takahiro SAITO et al., "Nonlinear Image-Decomposition Method Utilizing Inter-Channel Color Cross-Correlations", The Transactions of the Institute of Electronics, Information and Communication Engineers, The Institute of Electronics, Information and Communication Engineers, 01 October 2009 (01.10.2009), vol.J92-D, no.10, pages 1733 to 1736 | 1-22 |
| A | JP 2010-526455 A (Euclid Discoveries, LLC), 29 July 2010 (29.07.2010), paragraph [0028] & WO 2008/091483 A2    & EP 2130381 A2 & US 2010/0008424 A1    & CA 2676219 A & TW 200838316 A | 1-22 |
| A | JP 2003-069999 A (Mitsubishi Electric Corp.), 07 March 2003 (07.03.2003), paragraphs [0015] to [0017], [0033] to [0035], [0070] to [0076], [0101] to [0103] (Family: none) | 1-22 |

Form PCT/ISA/210 (continuation of second sheet) (July 2009)

## REFERENCES CITED IN THE DESCRIPTION

**Patent documents cited in the description**

- JP 2008113292 A

- JP 2009260779 A

**Non-patent literature cited in the description**

- Text of ISO/IEC 14496-10 Advanced Video Coding. *ISO/IEC MPEG and ITU-T VCEG*
- **J. F. AUJOL ; G. GILBOA ; T. CHAN ; S. OSHER.** Structure-Texture Image Decomposition - Modeling, Algorithms, and Parameter Selection. *Int. J. Comput. Vis.,* April 2006, vol. 67 (1), 111-136

- Nonlinear image decomposition method utilizing inter-channel color cross-correlations. **T. SAITO ; H. AIZAWA ; T. KOMATSU.** The IEICE transactions on information and systems. 2009, vol. J92-D, 1733-1736